# EUROPEAN PATENT APPLICATION

(11) **EP 4 694 571 A1**
(43) Date of publication of application: **11.02.2026**
(21) Application number: 23929350.9
(22) Date of filing: 30.03.2023
(51) Int. Cl.: H04W 88/04, H04W 76/19

(54) **METHODS AND APPARATUSES FOR INDICATING TERMINAL STATE, AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2023/085285
(87) International publication number: WO 2024/197755

(57) **Abstract**

The present disclosure relates to methods and apparatuses for indicating terminal states, and a storage medium. A method comprises: a first terminal may send to a relay terminal a first message according to a bearer configuration, wherein the first message may be used for instructing the relay terminal to enter a connected state, and the bearer configuration is used for indicating whether a first radio bearer of the first terminal can be transmitted by means of an indirect path, the first radio bearer being a radio bearer by means of which the first terminal communicates with a network device, and the indirect path being a path for forwarding data or a signaling between the first terminal and the network device by means of the relay terminal. Thus, the first terminal may instruct the relay terminal to enter the connected state by means of the first message, thereby improving the reliability of indirect path communication.

## Description

### FIELD

The present disclosure relates to the field of communication technologies, and particularly to a method for indicating a terminal state, an apparatus, and a storage medium.

### BACKGROUND

With the development of wireless communication technologies, to achieve direct communication between terminal devices, the 3rd Generation Partnership Project (3GPP) has defined a communication method using a sidelink (which may also be referred to as a side link or a lateral link). For example, a typical application scenario of the sidelink is Vehicle-to-Everything (V2X). In V2X, each vehicle can serve as a terminal device, and terminal devices can transmit information through the sidelink, thereby effectively reducing communication delay. In a sidelink communication scenario, a terminal device can also communicate with a network device. For example, the terminal device and the network device may communicate through a direct path or an indirect path.

### SUMMARY

Embodiments of the present disclosure provide a method for indicating a terminal state, an apparatus, and a storage medium.

According to a first aspect of the embodiments of the present disclosure, a method for indicating a terminal state is provided, performed by a first terminal, the method includes:
sending a first message to a relay terminal according to a bearer configuration; where the first message is used to instruct the relay terminal to enter a connected state, the bearer configuration is used to indicate whether a first radio bearer of the first terminal is capable of being transmitted via an indirect path, the first radio bearer is a radio bearer for communication between the first terminal and a network device, and the indirect path is a path for forwarding data or a signaling between the first terminal and the network device via the relay terminal.

According to a second aspect of the embodiments of the present disclosure, a method for indicating a terminal state is provided, performed by a relay terminal, the method includes:
receiving a first message sent by a first terminal; where the first message is a message sent by the first terminal according to a bearer configuration, the bearer configuration is used to indicate whether a first radio bearer of the first terminal is capable of being transmitted via an indirect path, the first radio bearer is a radio bearer for communication between the first terminal and a network device, and the indirect path is a path for forwarding data or a signaling between the first terminal and the network device via the relay terminal;
entering a connected state according to the first message.

According to a third aspect of the embodiments of the present disclosure, a method for indicating a terminal state is provided, performed by a network device, the method includes:
sending a second message to a first terminal; where the second message is used to instruct the first terminal to configure an indirect path and send a first message to a relay terminal according to a bearer configuration, the first message is used to instruct the relay terminal to enter a connected state, the bearer configuration is used to indicate whether a first radio bearer of the first terminal is capable of being transmitted via an indirect path, the first radio bearer is a radio bearer for communication between the first terminal and the network device, and the indirect path is a path for forwarding data or a signaling between the first terminal and the network device via the relay terminal.

According to a fourth aspect of the embodiments of the present disclosure, an apparatus for indicating a terminal state is provided, applied to a first terminal, the apparatus includes:
a first transceiver module, configured to send a first message to a relay terminal according to a bearer configuration; where the first message is used to instruct the relay terminal to enter a connected state, the bearer configuration is used to indicate whether a first radio bearer of the first terminal is capable of being transmitted via an indirect path, the first radio bearer is a radio bearer for communication between the first terminal and a network device, and the indirect path is a path for forwarding data or a signaling between the first terminal and the network device via the relay terminal.

According to a fifth aspect of the embodiments of the present disclosure, an apparatus for indicating a terminal state is provided, applied to a relay terminal, the apparatus includes:
a second transceiver module, configured to receive a first message sent by a first terminal; where the first message is a message sent by the first terminal according to a bearer configuration, the bearer configuration is used to indicate whether a first radio bearer of the first terminal is capable of being transmitted via an indirect path, the first radio bearer is a radio bearer for communication between the first terminal and a network device, and the indirect path is a path for forwarding data or a signaling between the first terminal and the network device via the relay terminal;
a second processing module, configured to enter a connected state according to the first message.

According to a sixth aspect of the embodiments of the present disclosure, an apparatus for indicating a terminal state is provided, applied to a network device, the apparatus includes:
a third transceiver module, configured to send a second message to a first terminal; where the second message is used to instruct the first terminal to configure an indirect path and send a first message to a relay terminal according to a bearer configuration, the first message is used to instruct the relay terminal to enter a connected state, the bearer configuration is used to indicate whether a first radio bearer of the first terminal is capable of being transmitted via an indirect path, the first radio bearer is a radio bearer for communication between the first terminal and the network device, and the indirect path is a path for forwarding data or a signaling between the first terminal and the network device via the relay terminal.

According to a seventh aspect of the embodiments of the present disclosure, an apparatus for indicating a terminal state is provided, includes:
a processor;
a memory for storing processor-executable instructions;
where the processor is configured to perform the steps of the method for indicating a terminal state provided in the first aspect of the present disclosure.

According to an eighth aspect of the embodiments of the present disclosure, an apparatus for indicating a terminal state is provided, includes:
a processor;
a memory for storing processor-executable instructions;
where the processor is configured to perform the steps of the method for indicating a terminal state provided in the second aspect of the present disclosure.

According to a ninth aspect of the embodiments of the present disclosure, an apparatus for indicating a terminal state is provided, includes:
a processor;
a memory for storing processor-executable instructions;
where the processor is configured to perform the steps of the method for indicating a terminal state provided in the third aspect of the present disclosure.

According to a tenth aspect of the embodiments of the present disclosure, a computer-readable storage medium is provided, having stored thereon computer program instructions which, when executed by a processor, implement the steps of the method for indicating a terminal state provided in the first aspect of the present disclosure.

According to an eleventh aspect of the embodiments of the present disclosure, a computer-readable storage medium is provided, having stored thereon computer program instructions which, when executed by a processor, implement the steps of the method for indicating a terminal state provided in the second aspect of the present disclosure.

According to a twelfth aspect of the embodiments of the present disclosure, a computer-readable storage medium is provided, having stored thereon computer program instructions which, when executed by a processor, implement the steps of the method for indicating a terminal state provided in the third aspect of the present disclosure.

According to a thirteenth aspect of the embodiments of the present disclosure, a communication system is provided, including:
a first terminal, where the first terminal is configured to perform the method for indicating a terminal state provided in the first aspect of the present disclosure;
a relay terminal, where the relay terminal is configured to perform the method for indicating a terminal state provided in the second aspect of the present disclosure;
a network device, where the network device is configured to perform the method for indicating a terminal state provided in the third aspect of the present disclosure.

The technical solutions provided by the embodiments of the present disclosure may include the following beneficial effects: the first terminal can send a first message to the relay terminal according to the bearer configuration. The first message can be used to instruct the relay terminal to enter a connected state, the bearer configuration is used to indicate whether a first radio bearer of the first terminal is capable of being transmitted via an indirect path, the first radio bearer is a radio bearer for communication between the first terminal and a network device, and the indirect path is a path for forwarding data or a signaling between the first terminal and the network device via the relay terminal. In this way, the first terminal can instruct the relay terminal to enter the connected state through the first message, thereby improving the reliability of indirect path communication.

It should be understood that the above general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram of a communication system according to an embodiment.
FIG. 2 is a flowchart of a method for indicating a terminal state according to an embodiment.
FIG. 3 is a flowchart of a method for indicating a terminal state according to an embodiment.
FIG. 4 is a flowchart of a method for indicating a terminal state according to an embodiment.
FIG. 5 is a flowchart of a method for indicating a terminal state according to an embodiment.
FIG. 6 is a flowchart of a method for indicating a terminal state according to an embodiment.
FIG. 7 is a flowchart of a method for indicating a terminal state according to an embodiment.
FIG. 8 is a flowchart of a method for indicating a terminal state according to an embodiment.
FIG. 9 is a block diagram of an apparatus for indicating a terminal state according to an embodiment.
FIG. 10 is a block diagram of an apparatus for indicating a terminal state according to an embodiment.
FIG. 11 is a block diagram of an apparatus for indicating a terminal state according to an embodiment.
FIG. 12 is a block diagram of an apparatus for indicating a terminal state according to an embodiment.
FIG. 13 is a block diagram of an apparatus for indicating a terminal state according to an embodiment.

### DETAILED DESCRIPTION

Exemplary embodiments will be described in detail here, examples of which are illustrated in the accompanying drawings. When the following description refers to the drawings, the same numbers in different drawings denote the same or similar elements unless otherwise indicated. The implementations described in the following exemplary embodiments do not represent all implementations consistent with the present disclosure. Rather, they are merely examples of apparatuses and methods consistent with some aspects of the present disclosure as detailed in the appended claims.

In the description of the embodiments of the present disclosure, the terms such as "first", "second", etc., are used to distinguish similar objects and are not necessarily to be understood as indicating a specific order or sequence. Furthermore, in the absence of a contrary explanation, in the description with reference to the drawings, the same reference numerals in different drawings denote the same elements.

In the description of the embodiments of the present disclosure, unless otherwise specified, "a plurality of" means two or more, and other quantifiers are similar thereto. "At least one", "one or more", or similar expressions thereof, refer to any combination of these items, including any combination of a single item or multiple items. For example, "at least one" may represent any number; for another example, one or more of a, b, and c may represent: a, b, c, a-b, a-c, b-c, or a-b-c, where a, b, and c may be single or multiple. "And/or" describes an association relationship between associated objects, indicating that three relationships may exist. For example, A and/or B may indicate: A exists alone, both A and B exist, and B exists alone, where A and B may be singular or plural. The character "/" generally indicates an "or" relationship between the associated objects. The singular forms "a", "an", "the", "said", "above", and "foregoing" are also intended to include plural forms, unless the context clearly indicates otherwise.

In the description of the embodiments of the present disclosure, expressions such as "in a case A, in another case B", "in response to a case A, in response to another case B", etc., may include the following technical solutions depending on the situation: performing A regardless of B, i.e., A in some embodiments; performing B regardless of A, i.e., B in some embodiments; selectively performing A or B, i.e., selecting to perform A or B in some embodiments; performing both A and B, i.e., A and B in some embodiments. When there are more branches such as A, B, C, etc., it is similar to the above.

In the description of the embodiments of the present disclosure, "comprising A", "including A", "for indicating A", "carrying A", may be interpreted as directly carrying A, or may be interpreted as indirectly indicating A.

In the description of the embodiments of the present disclosure, terms such as "in response to...", "in response to determining...", "in the case of...", "when...", "if...", etc., may be used interchangeably.

In some embodiments, terms such as "greater than", "greater than or equal to", "above", "higher than", "not less than", etc., may be used interchangeably; terms such as "less than", "less than or equal to", "below", "lower than", "not greater than", etc., may be used interchangeably.

In some embodiments, terms such as "network element", "node", "function", "apparatus", "device", "system", "chip", "chip system", etc., may be used interchangeably.

Furthermore, each element, each row, or each column in the tables of the embodiments of the present disclosure may be implemented as an independent embodiment, and any combination of elements, rows, or columns may also be implemented as an independent embodiment.

Although operations or steps are described in a specific order in the embodiments or the drawings of the present disclosure, it should not be understood as requiring that these operations or steps be performed in the specific order shown or in serial order, or that all shown operations or steps be performed to achieve desired results. In the embodiments of the present disclosure, these operations or steps may be performed in any order without conflict; these operations or steps may also be performed in parallel; a part of these operations or steps may also be performed; operations or steps from multiple embodiments or drawings may also be arbitrarily combined, which is not limited in the embodiments of the present disclosure.

It should be noted that the embodiments of the present disclosure are not exhaustive, but are only illustrative of some embodiments and are not intended to specifically limit the protection scope of the present disclosure. Without conflict, each step in one embodiment may be implemented as an independent embodiment, and the steps may be arbitrarily combined. For example, a solution obtained by removing some steps from one embodiment may also be implemented as an independent embodiment, and the order of the steps in one embodiment may be arbitrarily exchanged. In addition, optional implementation manners in one embodiment may be arbitrarily combined; furthermore, the embodiments may be arbitrarily combined. For example, part or all of the steps of different embodiments may be arbitrarily combined, and one embodiment may be arbitrarily combined with optional implementation manners of other embodiments.

The implementation environment of the embodiments of the present disclosure is introduced below.

The technical solutions of the embodiments of the present disclosure may be applied to various communication systems. The communication system may include one or more of a fourth generation (4G) communication system, a fifth generation (5G) communication system, and other future wireless communication systems (such as 6G). The communication system may also include one or more of a Public Land Mobile Network (PLMN) network, a Device-to-Device (D2D) communication system, a Machine to Machine (M2M) communication system, an Internet of Things (IoT) communication system, a Vehicle-to-Everything (V2X) communication system, or other communication systems.

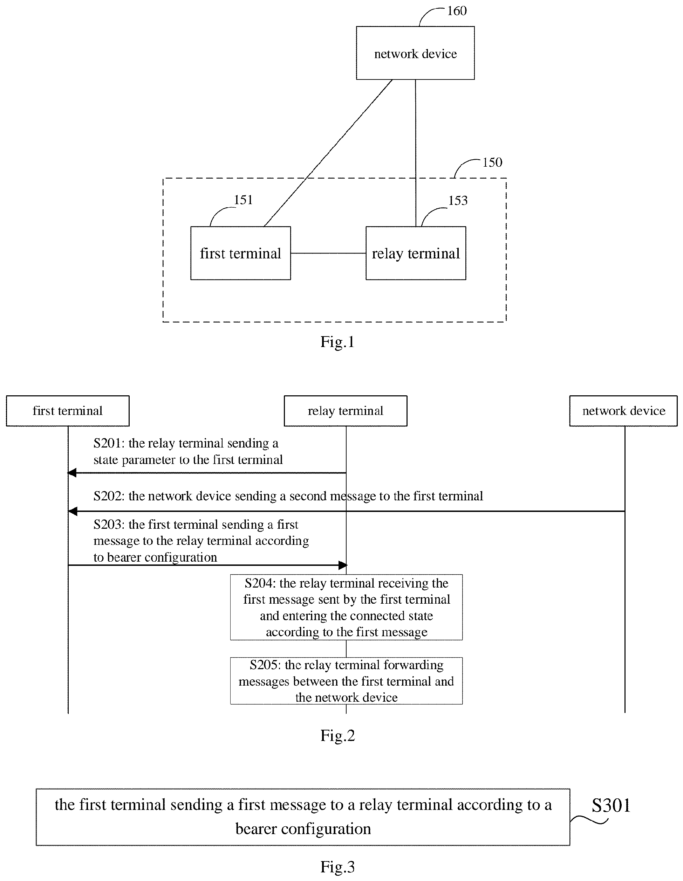

FIG. 1 is a schematic diagram of a communication system 100 according to an embodiment. As shown in FIG. 1, the communication system 100 may include a terminal device 150 and a network device 160. The communication system may be used to support 4G network access technologies, such as Long Term Evolution (LTE) access technology, or 5G network access technologies, such as New Radio Access Technology (New RAT), or other future wireless communication technologies. It should be noted that in this communication system, the number of network devices and terminal devices may be one or more. The number of network devices and terminal devices in the communication system shown in FIG. 1 is only an adaptive example, which is not limited in the present disclosure.

The network device in FIG. 1 may be used to support terminal access. For example, the network device may include an evolved Node B (eNB or eNodeB) in LTE; the network device may also include a next Generation Node B (gNB or gNodeB) in a 5G network; the network device may also include an NG-Radio Access Network (NG-RAN) device in a 5G network; the network device may also include at least one of a base station in a future evolved Public Land Mobile Network (PLMN), a Broadband Network Gateway (BNG), an aggregation switch, or a non-3GPP access device. Optionally, the network device in the embodiments of the present disclosure may include at least one of the following various forms of base stations, for example: a macro base station, a micro base station (also referred to as a small station), a relay station, an access point, a 5G base station or a future base station, a satellite, a Transmitting and Receiving Point (TRP), a Transmitting Point (TP), a mobile switching center, and other devices that perform base station functions in a Device-to-Device (D2D), Machine-to-Machine (M2M), Internet of Things (IoT), Vehicle-to-Everything (V2X) communication system, or other communication systems. The embodiments of the present disclosure do not specifically limit this. For convenience of description, in the embodiments of the present disclosure, devices that provide wireless communication functions for terminal devices are collectively referred to as network devices or base stations.

The terminal device in FIG. 1 may be an electronic device that provides voice or data connectivity. For example, the terminal device may also be referred to as User Equipment (UE), a Subscriber Unit, a Mobile Station, a Station, a Terminal, etc. For example, the terminal device may include a smartphone, smart wearable device, smart speaker, smart tablet, wireless modem, Wireless Local Loop (WLL) station, Personal Digital Assistant (PDA), Customer Premise Equipment (CPE), etc. With the development of wireless communication technologies, devices that can access a communication system, communicate with a network device of the communication system, communicate with other objects through the communication system, or directly communicate between two or more devices may be the terminal device in the embodiments of the present disclosure; for example, terminals and cars in intelligent transportation, household devices in smart homes, power meter reading instruments in smart grids, voltage monitoring instruments, environmental monitoring instruments, video monitoring instruments in intelligent security networks, cash registers, etc. In the embodiments of the present disclosure, the terminal device may communicate with the network device. Multiple terminal devices may also communicate with each other. The terminal device may be statically fixed or mobile, which is not limited in the embodiments of the present disclosure.

In some embodiments of the present disclosure, as shown in FIG. 1, the terminal device 150 may include a first terminal 151 and a relay terminal 153. The relay terminal 153 may be used to provide a relay function for communication between the first terminal and the network device. In this scenario, the first terminal 151 may be referred to as a remote terminal or remote UE, and the relay terminal 153 providing the relay function may be referred to as a relay UE. The relay terminal 153 and the network device 160 may communicate through a Uu interface. The first terminal 151 and the relay terminal 153 may communicate through a sidelink. The interface for communication between the first terminal 151 and the relay terminal 153 may be referred to as a PC5 interface or a direct communication interface. The manner of sidelink communication between the first terminal 151 and the relay terminal 153 may include any one or more of unicast, multicast, or broadcast.

It should be noted that in FIG. 1, the terminal device 150 may further include a second terminal, a third terminal, or more terminals; the first terminal may be one or more, and the relay terminal may also be one or more, which is not limited in the present disclosure.

The manner in which the first terminal 151 communicates with the network device 160 may include direct communication and/or indirect communication.

In some embodiments, the first terminal 151 may directly communicate with the network device 160 through a direct path, which may also be referred to as a direct link, a Uu interface link, or a cellular communication interface link. The direct path may include an uplink channel and/or a downlink channel between the first terminal and the network device. For example, the direct path may include one or more of a Physical Random Access Channel (PRACH), a Physical Uplink Control Channel (PUCCH), a Physical Uplink Shared Channel (PUSCH), a Physical Downlink Shared Channel (PDSCH), a Physical Downlink Control Channel (PDCCH), etc. Similarly, the relay terminal may also communicate with the network device through a direct path.

In other embodiments, the first terminal 151 may indirectly communicate with the network device 160 through an indirect path, which may also be referred to as an indirect link or a relay link. The indirect path may be a path for forwarding data or a signaling between the first terminal and the network device via the relay terminal. For example, the indirect path may include a sidelink between the first terminal and the relay terminal and a direct path between the relay terminal and the network device. The first terminal sends data or a signaling to the relay terminal, and the relay terminal may forward the data or a signaling to the network device; similarly, the network device may also send data or a signaling to the relay terminal, and the relay terminal may forward the data or a signaling to the first terminal.

In still other embodiments, the first terminal 151 may communicate with the network device 160 through both a direct path and an indirect path. That is, both a direct path and an indirect path may exist between the first terminal and the network device simultaneously, which can improve transmission rate and transmission reliability. This communication method between the first terminal and the network device may also be referred to as Multipath.

FIG. 2 is a flowchart of a method for indicating a terminal state according to an embodiment. The method may be performed by the aforementioned communication system. As shown in FIG. 2, the method may include:

S201: the relay terminal sending a state parameter to the first terminal.

The state parameter may be used to indicate a connection state of the relay terminal. The connection state may also be referred to as an RRC connection state or RRC state.

The relay terminal may be a terminal that provides a relay function for communication between the first terminal and the network device. The first terminal may be referred to as a remote terminal or remote UE.

The connection state of the relay terminal may be a connected state, an idle state, an inactive state, or a dormant state; similarly, the connection state of the first terminal may also be a connected state, an idle state, an inactive state, or a dormant state. It should be noted that states other than the connected state may also be referred to as non-connected states.

In some embodiments, the relay terminal may send the state parameter to the first terminal via a sidelink (e.g., a PC5 interface link).

For example, the relay terminal may carry the state parameter in a discovery message on the sidelink.

The discovery message may further include at least one of a terminal identifier parameter of the relay terminal, a terminal capability parameter, a serving cell identifier, or a neighboring cell identifier.

The terminal identifier parameter may be used to uniquely identify the relay terminal. For example, the terminal identifier parameter may include at least one of a Subscription Concealed Identifier (SUCI), a Subscriber Permanent Identifier (SUPI), a Globally Unique Temporary Identifier (GUTI), a Permanent Equipment Identifier (PEI), an International Mobile Equipment Identity (IMEI), an International Mobile Subscriber Identity (IMSI), a Temporary Mobile Subscriber Identity (TMSI), a Radio Network Temporary Identity (RNTI), or an IP address. The GUTI may be a 5G-GUTI, a 4G-GUTI, or a GUTI under other network standards, which is not limited in the embodiments of the present disclosure.

The terminal capability parameter may be used to indicate that the relay terminal has the capability to provide a relay function.

The serving cell identifier may be used to indicate an identifier of a cell where the relay terminal currently resides.

The neighboring cell identifier may be used to indicate a neighboring cell of the cell where the relay terminal currently resides.

In some embodiments, the relay terminal may periodically send the state parameter to the first terminal.

The period for the relay terminal to send the state parameter may be any preset time period, such as 100 milliseconds or 1 second.

Optionally, the relay terminal may periodically send the state parameter when the connection state is the connected state; and may not send the state parameter when the connection state is not the connected state. In this way, if the first terminal does not receive the state parameter for multiple consecutive periods, it may determine that the connection state of the relay terminal is not the connected state.

In other embodiments, the relay terminal may also send the state parameter to the first terminal when the connection state changes.

For example, the relay terminal may send the state parameter to the first terminal when the connection state changes from the idle state to the connected state. The state parameter may indicate that the connection state of the relay terminal is the connected state.

In still other embodiments, the relay terminal may send the state parameter to the first terminal multiple times after the connection state changes. This can improve the transmission reliability of the state parameter.

In some embodiments, the first terminal may also send a state parameter of the first terminal to the relay terminal.

S202: the network device sending a second message to the first terminal.

The second message may be used to instruct the first terminal to configure an indirect path.

For example, the network device may send the second message to the first terminal via a direct path (e.g., a Uu interface). The second message may include an indirect path addition configuration. The indirect path addition configuration may include path parameters corresponding to the indirect path. The first terminal may configure the indirect path according to the first message.

In some embodiments, the second message may include a terminal identifier of the relay terminal. The first terminal may determine the relay terminal corresponding to the indirect path according to the terminal identifier.

S203: the first terminal sending a first message to the relay terminal.

The first message may be used to instruct the relay terminal to enter a connected state.

In some embodiments, the first terminal may send the first message to the relay terminal after receiving the second message sent by the network device.

The first terminal may also determine the relay terminal corresponding to the indirect path according to the second message and send the first message to the relay terminal.

In other embodiments, the first terminal may also actively send the first message to the relay terminal according to the bearer configuration.

For example, the first terminal may actively initiate establishing an indirect path, determine the relay terminal corresponding to the indirect path, and send the first message to the relay terminal.

In some embodiments, the first terminal may send the first message to the relay terminal according to the bearer configuration.

The bearer configuration may be used to indicate whether a first radio bearer of the first terminal is capable of being transmitted via an indirect path. The first radio bearer is a radio bearer for communication between the first terminal and the network device. The indirect path is a path for forwarding data or a signaling between the first terminal and the network device via the relay terminal.

The first radio bearer may be a Signaling Radio Bearer (SRB) or a Data Radio Bearer (DRB). In some embodiments, the first radio bearer may be a signaling radio bearer SRB1. The SRB1 may be used to carry RRC signaling and some Non-Access Stratum (NAS) signaling between the first terminal and the network device. The RRC signaling may include RRC reconfiguration messages, RRC reconfiguration complete messages, etc.

In this step, the first terminal may first determine, according to the bearer configuration, whether the first radio bearer is capable of being transmitted via the indirect path, and then send the first message according to the determination result.

In some embodiments, the first terminal may determine that the first radio bearer is capable of being transmitted via the indirect path if it determines, according to the bearer configuration, that a Sidelink Relay Adaptation Protocol (SRAP) entity corresponding to the first radio bearer exists. The SRAP entity may be used to transmit signaling or data via the indirect path.

In other embodiments, the first terminal may determine that the first radio bearer is capable of being transmitted via the indirect path if it determines that the first radio bearer is a split bearer (e.g., split SRB1). The split bearer may indicate that the first radio bearer can transmit signaling or data via both the direct path and the indirect path.

It should be noted that "determining whether the first radio bearer is capable of being transmitted via the indirect path" may also be expressed as "determining whether the first radio bearer is configured on the indirect path", or may be expressed as "determining whether the first radio bearer is transmitted via the indirect path". If the first radio bearer is configured on the indirect path, then the first radio bearer is capable of being transmitted via the indirect path, or the first radio bearer is transmitted via the indirect path. For example, the first radio bearer SRB1 may be transmitted via a Sidelink Radio Link Control (SL-RLC) entity corresponding to the indirect path.

Thus, the first terminal may determine, according to the bearer configuration, whether the first radio bearer is capable of being transmitted via the indirect path, or the first terminal may determine, according to the bearer configuration, whether the first radio bearer is configured on the indirect path.

In some embodiments, the first terminal may send the first message via the indirect path if it determines, according to the bearer configuration, that the first radio bearer is capable of being transmitted via the indirect path.

The first message may be a response message from the first terminal to the second message. For example, if the second message is an RRC reconfiguration message, the first message may be an RRC reconfiguration complete message.

In some embodiments, the relay terminal may enter the connected state according to the first message, and the relay terminal may also forward the first message to the network device.

The first terminal may send the first message via a Sidelink Radio Link Control (SL-RLC) entity corresponding to the indirect path.

For example, the first message may be carried on the SRB1. The SRB1 may be sent to the relay terminal via SL-RLC1, and the relay terminal may also receive the first message via SL-RLC1.

In this way, the first terminal may send the first message to the relay terminal via the indirect path.

In other embodiments, the first terminal may send the first message via a sidelink if it determines, according to the bearer configuration, that the first radio bearer is not capable of being transmitted via the indirect path.

The sidelink may be a link between the first terminal and the relay terminal.

In an embodiment, the first message may be a Sidelink RRC (SL-RRC) message, i.e., an SL-RRC message transmitted via the PC5 interface. For example, the first message may be an SL-RRC reconfiguration (RRCReconfigurationSidelink) message.

The SL-RRC message may include a first indication parameter. The first indication parameter may be used to instruct the relay terminal to enter the connected state.

The relay terminal may receive the first message via the sidelink and, in response to the first message, enter the connected state.

In this way, the first terminal may send the first message to the relay terminal via the sidelink.

In an embodiment, the first terminal may obtain the connection state of the relay terminal and determine whether to send the first message according to the connection state.

For example, the first terminal may send the first message via the sidelink if the connection state of the relay terminal is not the connected state. The first message may instruct the relay terminal to enter the connected state.

For another example, the first terminal may not send the first message (the SL-RRC reconfiguration message) if the connection state of the relay terminal is the connected state.

For yet another example, the first terminal may not send the first indication parameter if the connection state of the relay terminal is the connected state.

In some embodiments, the first message may include an RRC reconfiguration complete message and an SL-RRC reconfiguration message. The first terminal may send the RRC reconfiguration complete message but not send the SL-RRC reconfiguration message if the connection state of the relay terminal is the connected state.

In this way, if the relay terminal is already in the connected state, the first terminal may avoid sending the SL-RRC reconfiguration message or the first indication parameter, thereby avoiding unnecessary signaling transmission and saving wireless resources.

The first terminal may receive the state parameter sent by the relay terminal and determine whether the connection state of the relay terminal is the connected state according to the state parameter. The state parameter may be used to indicate the connection state of the relay terminal. The connection state of the relay terminal may be the connected state, the idle state, the inactive state, or the dormant state.

For specific ways in which the relay terminal sends the state parameter, reference may be made to the description in the foregoing step S201, which will not be repeated here.

In this way, the first terminal may send the first message to the relay terminal via the sidelink if the relay terminal is not in the connected state. The first message may instruct the relay terminal to enter the connected state.

S204: the relay terminal receiving the first message sent by the first terminal and entering the connected state according to the first message.

In some embodiments, the relay terminal may receive the first message via the sidelink or the indirect path if its connection state is not the connected state, and enter the connected state after receiving the first message.

In other embodiments, the relay terminal may not need to receive the first message, or may discard the first message, if its connection state is the connected state.

In still other embodiments, after receiving the first message, if the relay terminal is in a non-connected state (e.g., the idle state or the inactive state), it may enter the connected state; if the relay terminal is in the connected state, it may remain in the connected state.

Optionally, after receiving the first message, if the relay terminal is in the connected state, it may restart a deactivation timer. It should be noted that the deactivation timer may be used to keep the relay terminal in the connected state. For example, the relay terminal may transition from the connected state to a non-connected state when the deactivation timer expires. By restarting the deactivation timer, the relay terminal may remain in the connected state, preventing the relay terminal from entering the non-connected state prematurely.

In some embodiments, the first message may further include a connection maintenance duration. After receiving the first message, the relay terminal may set the duration of the deactivation timer to the connection maintenance duration. In this way, the connected state of the relay terminal can be maintained for at least the connection maintenance duration, thereby improving the reliability of indirect path communication.

S205: the relay terminal forwarding messages between the first terminal and the network device.

In some embodiments, the relay terminal may forward the first message to the network device.

In some embodiments, the relay terminal may provide a relay forwarding function between the first terminal and the network device. For example, after entering the connected state, the relay terminal may forward data or a signaling sent by the first terminal to the network device, and may also forward data or a signaling sent by the network device to the first terminal.

Using the above method, the first terminal may instruct the relay terminal to enter the connected state through the first message, and establish an indirect path with the network device through the relay terminal. The first terminal may communicate with the network device through the indirect path.

FIG. 3 is a flowchart of a method for indicating a terminal state according to an embodiment. The method may be performed by the first terminal in the aforementioned communication system. As shown in FIG. 3, the method may include:

S301: the first terminal sending a first message to a relay terminal according to a bearer configuration.

The first message is used to instruct the relay terminal to enter a connected state. The bearer configuration is used to indicate whether a first radio bearer of the first terminal is capable of being transmitted via an indirect path. The first radio bearer is a radio bearer for communication between the first terminal and a network device. The indirect path is a path for forwarding data or a signaling between the first terminal and the network device via the relay terminal.

The first radio bearer may be a Signaling Radio Bearer (SRB) or a Data Radio Bearer (DRB). In some embodiments, the first radio bearer may be a signaling radio bearer SRB1.

In some embodiments, the first terminal may send the first message to the relay terminal according to the bearer configuration after receiving a second message sent by the network device.

In other embodiments, the first terminal may also actively send the first message to the relay terminal.

In this step, the first terminal may first determine, according to the bearer configuration, whether the first radio bearer is capable of being transmitted via the indirect path, and then send the first message according to the determination result.

In some embodiments, the first terminal may determine that the first radio bearer is capable of being transmitted via the indirect path if it determines, according to the bearer configuration, that a Sidelink Relay Adaptation Protocol (SRAP) entity corresponding to the first radio bearer exists. The SRAP entity may be used to transmit signaling or data via the indirect path.

In other embodiments, the first terminal may determine that the first radio bearer is capable of being transmitted via the indirect path if it determines that the first radio bearer is a split bearer (e.g., split SRB1). The split bearer may indicate that the first radio bearer can transmit signaling or data via both the direct path and the indirect path.

Thus, the first terminal may determine, according to the bearer configuration, whether the first radio bearer is capable of being transmitted via the indirect path, or the first terminal may determine, according to the bearer configuration, whether the first radio bearer is configured on the indirect path.

In some embodiments, the first terminal may send the first message via the indirect path if it determines, according to the bearer configuration, that the first radio bearer is capable of being transmitted via the indirect path.

The first message may be a response message from the first terminal to the second message. For example, if the second message is an RRC reconfiguration message, the first message may be an RRC reconfiguration complete message.

In some embodiments, the relay terminal may enter the connected state according to the first message, and the relay terminal may also forward the first message to the network device.

The first terminal may send the first message via a Sidelink Radio Link Control (SL-RLC) entity corresponding to the indirect path.

For example, the first message may be carried on the SRB1. The SRB1 may be sent to the relay terminal via SL-RLC1, and the relay terminal may also receive the first message via SL-RLC1.

In this way, the first terminal may send the first message to the relay terminal via the indirect path.

In other embodiments, the first terminal may send the first message via a sidelink if it determines, according to the bearer configuration, that the first radio bearer is not capable of being transmitted via the indirect path.

The sidelink may be a link between the first terminal and the relay terminal.

In this way, the first terminal may send the first message to the relay terminal via the sidelink.

In an embodiment, the first message may be a Sidelink RRC (SL-RRC) message. For example, the SL-RRC message may include a first indication parameter. The first indication parameter may be used to instruct the relay terminal to enter the connected state.

The relay terminal may receive the first message via the sidelink and, in response to the first message, enter the connected state.

In an embodiment, the first terminal may obtain the connection state of the relay terminal and determine whether to send the first message according to the connection state.

For example, the first terminal may send the first message via the sidelink if the connection state of the relay terminal is not the connected state. The first message may instruct the relay terminal to enter the connected state.

For another example, the first terminal may not send the first message (the SL-RRC reconfiguration message) if the connection state of the relay terminal is the connected state.

For yet another example, the first terminal may not send the first indication parameter if the connection state of the relay terminal is the connected state.

In some embodiments, the first message may include an RRC reconfiguration complete message and an SL-RRC reconfiguration message. The first terminal may send the RRC reconfiguration complete message but not send the SL-RRC reconfiguration message if the connection state of the relay terminal is the connected state.

In this way, if the relay terminal is already in the connected state, the first terminal may avoid sending the SL-RRC reconfiguration message or the first indication parameter, thereby avoiding unnecessary signaling transmission and saving wireless resources.

The first terminal may receive a state parameter sent by the relay terminal and determine whether the connection state of the relay terminal is the connected state according to the state parameter. The state parameter may be used to indicate the connection state of the relay terminal. The connection state of the relay terminal may be the connected state, the idle state, the inactive state, or the dormant state.

For specific ways in which the relay terminal sends the state parameter to the first terminal, reference may be made to the detailed description in the embodiment shown in FIG. 2 of the present disclosure, which will not be repeated here.

In this way, the first terminal may send the first message to the relay terminal via the sidelink if the relay terminal is not in the connected state. The first message may instruct the relay terminal to enter the connected state.

Using the above method, the first terminal may send a first message to the relay terminal according to the bearer configuration. The first message is used to instruct the relay terminal to enter a connected state. The bearer configuration is used to indicate whether a first radio bearer of the first terminal is capable of being transmitted via an indirect path. The first radio bearer is a radio bearer for communication between the first terminal and a network device. The indirect path is a path for forwarding data or a signaling between the first terminal and the network device via the relay terminal. In this way, the first terminal can instruct the relay terminal to enter the connected state through the first message, thereby improving the reliability of indirect path communication.

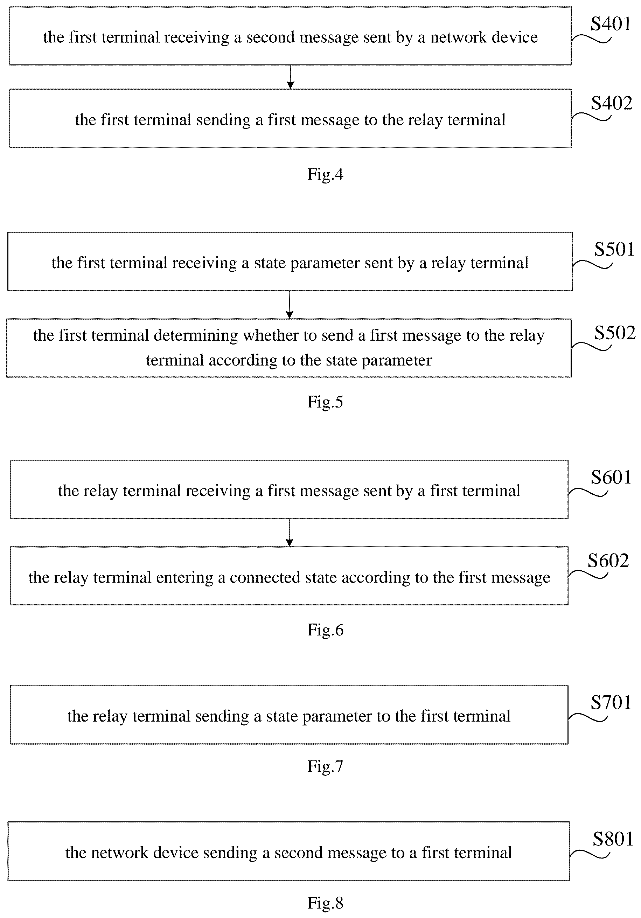

FIG. 4 is a flowchart of a method for indicating a terminal state according to an embodiment. The method may be performed by the first terminal in the aforementioned communication system. As shown in FIG. 4, the method may include:
S401: the first terminal receiving a second message sent by a network device.

The second message is used to instruct the first terminal to configure an indirect path.

For example, the first terminal may receive the second message sent by the network device via a direct path (e.g., a Uu interface). The second message may include an indirect path addition configuration. The indirect path addition configuration may include path parameters corresponding to the indirect path. The first terminal may configure the indirect path according to the first message.

In some embodiments, the second message may include a terminal identifier of the relay terminal. The first terminal may determine the relay terminal corresponding to the indirect path according to the terminal identifier.

S402: the first terminal sending a first message to the relay terminal.

The first message is used to instruct the relay terminal to enter a connected state.

In some embodiments, the first terminal may send the first message to the relay terminal after receiving the second message.

The first terminal may send the first message via the indirect path. Alternatively, the first terminal may also send the first message via a sidelink.

In other embodiments, the first terminal may send the first message to the relay terminal according to the bearer configuration after receiving the second message.

It should be noted that for specific ways in which the first terminal sends the first message to the relay terminal according to the bearer configuration, reference may be made to the detailed description in the embodiment shown in FIG. 2 of the present disclosure, which will not be repeated here.

In this way, the first terminal may send the first message to the relay terminal in response to receiving the second message sent by the network device.

In some embodiments, after receiving the second message, the first terminal may determine whether to send the first message to the relay terminal.

For example, if it is determined that the relay terminal is not in the connected state, or if the state of the relay terminal cannot be determined, the first message may be sent to the relay terminal to instruct the relay terminal to enter the connected state or maintain the connected state.

For another example, if it is determined that the relay terminal is in the connected state, the first message (which may be an SL-RRC message) may not be sent to the relay terminal.

In this way, the relay terminal can be instructed to enter the connected state, and signaling overhead can be reduced and wireless resources saved when the relay terminal is already in the connected state.

FIG. 5 is a flowchart of a method for indicating a terminal state according to an embodiment. The method may be performed by the first terminal in the aforementioned communication system. As shown in FIG. 5, the method may include:
S501: the first terminal receiving a state parameter sent by a relay terminal.

The state parameter is used to indicate a connection state of the relay terminal. The connection state may also be referred to as an RRC connection state or RRC state. The connection state of the relay terminal may be a connected state, an idle state, an inactive state, or a dormant state.

S502: the first terminal determining whether to send a first message to the relay terminal according to the state parameter.

For example, the first terminal may determine the connection state of the relay terminal according to the state parameter and determine whether to send the first message to the relay terminal according to the connection state.

For example, the first terminal may not send the first message to the relay terminal if the connection state of the relay terminal is the connected state.

For another example, the first terminal may send the first message to the relay terminal if the connection state of the relay terminal is not the connected state. The first message may instruct the relay terminal to enter the connected state.

For yet another example, the first terminal may send the first message to the relay terminal according to the bearer configuration if the connection state of the relay terminal is not the connected state.

It should be noted that for specific ways in which the first terminal sends the first message to the relay terminal according to the bearer configuration, reference may be made to the detailed description in the embodiment shown in FIG. 2 of the present disclosure, which will not be repeated here.

In this way, the first terminal may obtain the state parameter of the relay terminal and determine whether to send the first message to the relay terminal according to the state parameter.

FIG. 6 is a flowchart of a method for indicating a terminal state according to an embodiment. The method may be performed by the relay terminal in the aforementioned communication system. As shown in FIG. 6, the method may include:
S601: the relay terminal receiving a first message sent by a first terminal.

In some embodiments, the first message may be a message sent by the first terminal. The first message is used to instruct the relay terminal to enter a connected state.

In some embodiments, the first message may be a message sent by the first terminal according to a bearer configuration. The bearer configuration is used to indicate whether a first radio bearer of the first terminal is capable of being transmitted via an indirect path. The first radio bearer is a radio bearer for communication between the first terminal and a network device. The indirect path is a path for forwarding data or a signaling between the first terminal and the network device via the relay terminal.

The first radio bearer may be a Signaling Radio Bearer (SRB) or a Data Radio Bearer (DRB). In some embodiments, the first radio bearer may be a signaling radio bearer SRB1.

In some embodiments, the relay terminal may receive the first message sent by the first terminal via the indirect path.

For example, the first message may be an RRC reconfiguration complete message. The relay terminal may also send the RRC reconfiguration complete message to the network device.

For another example, the relay terminal may receive the first message sent by the first terminal via a Sidelink Radio Link Control (SL-RLC) entity corresponding to the indirect path. For example, the first message may be carried on the SRB1. The SRB1 may be sent to the relay terminal via SL-RLC1, and the relay terminal may receive the first message via SL-RLC1.

In this way, the relay terminal may receive the first message sent by the first terminal via the indirect path.

In other embodiments, the relay terminal may receive the first message sent by the first terminal via a sidelink.

The sidelink may be a link between the first terminal and the relay terminal.

In an embodiment, the first message may be a Sidelink RRC (SL-RRC) message, i.e., an SL-RRC message transmitted via the PC5 interface. For example, the first message may be an SL-RRC reconfiguration (RRCReconfigurationSidelink) message.

The SL-RRC message may include a first indication parameter. The first indication parameter may be used to instruct the relay terminal to enter the connected state.

The relay terminal may receive the first message via the sidelink and, in response to the first message, enter the connected state.

In this way, the relay terminal may receive the first message sent by the first terminal via the sidelink.

S602: the relay terminal entering a connected state according to the first message.

In some embodiments, the relay terminal may receive the first message via the sidelink or the indirect path if its connection state is not the connected state, and enter the connected state after receiving the first message.

In other embodiments, the relay terminal may not need to receive the first message, or may discard the first message, if its connection state is the connected state.

In still other embodiments, after receiving the first message, if the relay terminal is in a non-connected state (e.g., the idle state or the inactive state), it may enter the connected state; if the relay terminal is in the connected state, it may remain in the connected state.

Optionally, after receiving the first message, if the relay terminal is in the connected state, it may restart a deactivation timer. It should be noted that the deactivation timer may be used to keep the relay terminal in the connected state. For example, the relay terminal may transition from the connected state to a non-connected state when the deactivation timer expires. By restarting the deactivation timer, the relay terminal may remain in the connected state, preventing the relay terminal from entering the non-connected state prematurely.

In some embodiments, the first message may further include a connection maintenance duration. After receiving the first message, the relay terminal may set the duration of the deactivation timer to the connection maintenance duration. In this way, the connected state of the relay terminal can be maintained for at least the connection maintenance duration, thereby improving the reliability of indirect path communication.

Using the above method, the relay terminal may receive the first message sent by the first terminal and enter the connected state according to the first message. This can improve the reliability of indirect path communication.

FIG. 7 is a flowchart of a method for indicating a terminal state according to an embodiment. The method may be performed by the relay terminal in the aforementioned communication system. As shown in FIG. 7, the method may include:

S701: the relay terminal sending a state parameter to the first terminal.

The state parameter is used to indicate a connection state of the relay terminal.

For specific ways in which the relay terminal sends the state parameter to the first terminal, reference may be made to the detailed description in the embodiment shown in FIG. 2 of the present disclosure, which will not be repeated here.

In some embodiments, after sending the state parameter, the relay terminal may also receive the first message sent by the first terminal and enter the connected state according to the first message.

It should be noted that, without conflict, this embodiment may be combined with the foregoing embodiments or implementation manners of the present disclosure and their various optional solutions. The specific implementation of the above steps in this embodiment may also refer to the description in the foregoing embodiments of the present disclosure, which will not be repeated here.

In this way, the relay terminal may send the state parameter to the first terminal so that the first terminal sends the first message according to the state parameter. The relay terminal may enter the connected state according to the first message. This can improve the reliability of indirect path communication.

FIG. 8 is a flowchart of a method for indicating a terminal state according to an embodiment. The method may be performed by the network device in the aforementioned communication system. As shown in FIG. 8, the method may include:
S801: the network device sending a second message to a first terminal.

The second message is used to instruct the first terminal to configure an indirect path and send a first message to a relay terminal according to a bearer configuration. The first message is used to instruct the relay terminal to enter a connected state. The bearer configuration is used to indicate whether a first radio bearer of the first terminal is capable of being transmitted via an indirect path. The first radio bearer is a radio bearer for communication between the first terminal and the network device. The indirect path is a path for forwarding data or a signaling between the first terminal and the network device via the relay terminal.

The first radio bearer may be a Signaling Radio Bearer (SRB) or a Data Radio Bearer (DRB). In some embodiments, the first radio bearer may be a signaling radio bearer SRB1.

For example, the network device may send the second message to the first terminal via a direct path (e.g., a Uu interface). The second message may include an indirect path addition configuration. The indirect path addition configuration may include path parameters corresponding to the indirect path. The first terminal may configure the indirect path according to the first message.

In some embodiments, the second message may include a terminal identifier of the relay terminal. The first terminal may determine the relay terminal corresponding to the indirect path according to the terminal identifier.

Using the above method, the network device may send a second message to the first terminal to instruct the first terminal to configure an indirect path.

In an embodiment, the present disclosure also provides a communication system. The communication system may include a first terminal, a relay terminal, and a network device. The first terminal may perform the method for indicating a terminal state related to the first terminal in the foregoing embodiments of the present disclosure. The relay terminal may perform the method for indicating a terminal state related to the relay terminal in the foregoing embodiments of the present disclosure. The network device may perform the method for indicating a terminal state related to the network device in the foregoing embodiments of the present disclosure.

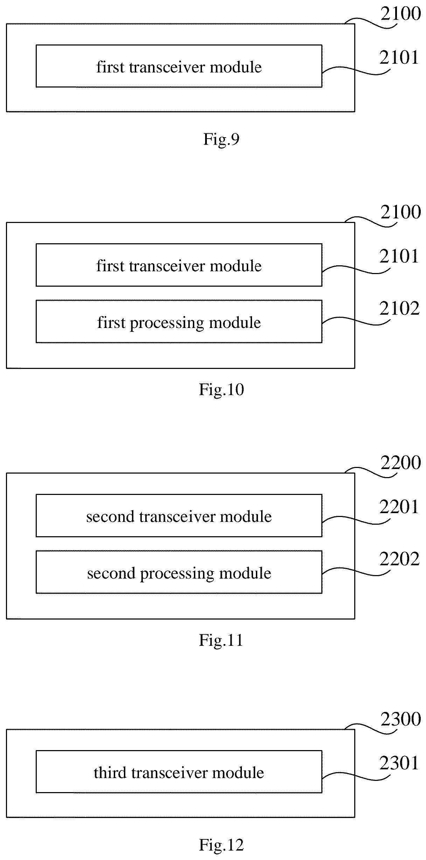

FIG. 9 is a block diagram of an apparatus 2100 for indicating a terminal state according to an embodiment. The apparatus 2100 may be applied to a first terminal, or the apparatus 2100 may be a first terminal. As shown in FIG. 9, the apparatus 2100 may include:
a first transceiver module 2101, configured to send a first message to a relay terminal according to a bearer configuration; where the first message is used to instruct the relay terminal to enter a connected state, the bearer configuration is used to indicate whether a first radio bearer of the first terminal is capable of being transmitted via an indirect path, the first radio bearer is a radio bearer for communication between the first terminal and a network device, and the indirect path is a path for forwarding data or a signaling between the first terminal and the network device via the relay terminal.

In some embodiments, the first transceiver module 2101 is configured to send the first message via the indirect path in response to determining, according to the bearer configuration, that the first radio bearer is capable of being transmitted via the indirect path.

In some embodiments, the first message is a Radio Resource Control (RRC) reconfiguration complete message.

In some embodiments, the first transceiver module 2101 is configured to send the first message via a Sidelink Radio Link Control (SL-RLC) entity corresponding to the indirect path.

In some embodiments, the first transceiver module 2101 is configured to send the first message via a sidelink in response to determining, according to the bearer configuration, that the first radio bearer is not capable of being transmitted via the indirect path, where the sidelink is a link between the first terminal and the relay terminal.

In some embodiments, the first message is a Sidelink RRC (SL-RRC) message. The SL-RRC message includes a first indication parameter, and the first indication parameter is used to instruct the relay terminal to enter the connected state.

In some embodiments, the first transceiver module 2101 is configured to send the first message via the sidelink in a case where a connection state of the relay terminal is not the connected state.

FIG. 10 is a block diagram of an apparatus 2100 for indicating a terminal state according to an embodiment. As shown in FIG. 10, the apparatus 2100 may further include:
a first processing module 2102, configured to not send the first message in a case where the connection state of the relay terminal is the connected state.

In some embodiments, the first transceiver module 2101 is further configured to receive a state parameter sent by the relay terminal. The state parameter is used to indicate the connection state of the relay terminal.

In some embodiments, the first processing module 2102 is configured to determine that the first radio bearer is capable of being transmitted via the indirect path in response to determining, according to the bearer configuration, that a Sidelink Relay Adaptation Protocol (SRAP) entity corresponding to the first radio bearer exists; or
determine that the first radio bearer is capable of being transmitted via the indirect path in a case where the first radio bearer is a split bearer.

In some embodiments, the first transceiver module 2101 is further configured to receive a second message sent by a network device. The second message is used to instruct the first terminal to configure an indirect path.

In some embodiments, the first radio bearer is a signaling radio bearer SRB1.

FIG. 11 is a block diagram of an apparatus 2200 for indicating a terminal state according to an embodiment. The apparatus 2200 may be applied to a relay terminal, or the apparatus 2200 may be a relay terminal. As shown in FIG. 11, the apparatus 2200 may include:
a second transceiver module 2201, configured to receive a first message sent by a first terminal; where the first message is a message sent by the first terminal according to a bearer configuration, the bearer configuration is used to indicate whether a first radio bearer of the first terminal is capable of being transmitted via an indirect path, the first radio bearer is a radio bearer for communication between the first terminal and a network device, and the indirect path is a path for forwarding data or a signaling between the first terminal and the network device via the relay terminal;
a second processing module 2202, configured to enter a connected state according to the first message.

In some embodiments, the second transceiver module 2201 is configured to receive the first message sent by the first terminal via the indirect path.

In some embodiments, the first message is a Radio Resource Control (RRC) reconfiguration complete message. The second transceiver module 2201 is further configured to send the RRC reconfiguration complete message to the network device.

In some embodiments, the second transceiver module 2201 is configured to receive the first message sent by the first terminal via a Sidelink Radio Link Control (SL-RLC) entity corresponding to the indirect path.

In some embodiments, the second transceiver module 2201 is configured to receive the first message sent by the first terminal via a sidelink; where the sidelink is a link between the first terminal and the relay terminal.

In some embodiments, the first message is a Sidelink RRC (SL-RRC) reconfiguration complete message. The SL-RRC reconfiguration complete message includes a first indication parameter, and the first indication parameter is used to instruct the relay terminal to enter the connected state.

In some embodiments, the second transceiver module 2201 is configured to receive the first message via the sidelink in a case where a connection state of the relay terminal is not the connected state.

In some embodiments, the second transceiver module 2201 is further configured to send a state parameter to the first terminal. The state parameter is used to indicate the connection state of the relay terminal.

In some embodiments, the first radio bearer is a signaling radio bearer SRB1.

FIG. 12 is a block diagram of an apparatus 2300 for indicating a terminal state according to an embodiment. The apparatus 2300 may be applied to a network device, or the apparatus 2300 may be a network device. As shown in FIG. 12, the apparatus 2300 may include:
a third transceiver module 2301, configured to send a second message to a first terminal; where the second message is used to instruct the first terminal to configure an indirect path and send a first message to a relay terminal according to a bearer configuration, the first message is used to instruct the relay terminal to enter a connected state, the bearer configuration is used to indicate whether a first radio bearer of the first terminal is capable of being transmitted via an indirect path, the first radio bearer is a radio bearer for communication between the first terminal and the network device, and the indirect path is a path for forwarding data or a signaling between the first terminal and the network device via the relay terminal.

In some embodiments, the first radio bearer is a signaling radio bearer SRB1.

Regarding the apparatus in the above embodiments, the specific manner in which each module performs operations has been described in detail in the embodiments related to the method, and will not be elaborated here.

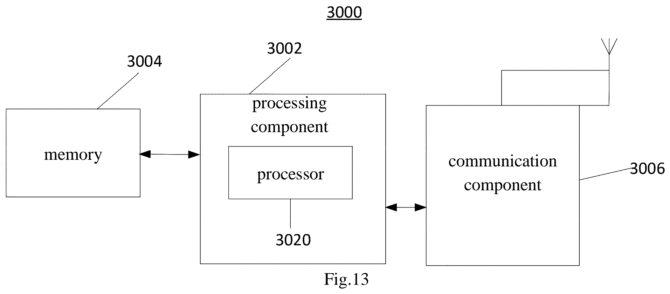

FIG. 13 is a block diagram of an apparatus for indicating a terminal state according to an embodiment. The apparatus 3000 for indicating a terminal state may be the first terminal, the relay terminal, or the network device in the communication system shown in FIG. 1.

Referring to FIG. 13, the apparatus 3000 may include one or more of the following components: a processing component 3002, a memory 3004, and a communication component 3006.

The processing component 3002 may be used to control overall operations of the apparatus 3000, such as operations associated with display, telephone calls, data communications, camera operations, and recording operations. The processing component 3002 may include one or more processors 3020 to execute instructions to perform all or part of the steps of the method for indicating a terminal state described above. Moreover, the processing component 3002 may include one or more modules to facilitate interaction between the processing component 3002 and other components.

The memory 3004 is configured to store various types of data to support operation of the apparatus 3000. Examples of such data include instructions for any application or method operating on the apparatus 3000, contact data, phonebook data, messages, pictures, videos, etc. The memory 3004 may be implemented by any type of volatile or non-volatile storage devices or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk, or optical disk.

The communication component 3006 is configured to facilitate wired or wireless communication between the apparatus 3000 and other devices. The apparatus 3000 may access a wireless network based on a communication standard, such as Wi-Fi, 2G, 3G, 4G, 5G, 6G, NB-IoT, eMTC, or a combination thereof. In an embodiment, the communication component 3006 receives a broadcast signal or broadcast related information from an external broadcast management system via a broadcast channel. In an embodiment, the communication component 3006 further includes a Near Field Communication (NFC) module to facilitate short-range communication. For example, the NFC module may be implemented based on Radio Frequency Identification (RFID) technology, Infrared Data Association (IrDA) technology, Ultra-Wideband (UWB) technology, Bluetooth (BT) technology, and other technologies.

In an embodiment, the apparatus 3000 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components, for performing the method for indicating a terminal state described above.

The apparatus 3000 may be an independent electronic device or a part of an independent electronic device. For example, in an embodiment, the electronic device may be an Integrated Circuit (IC) or a chip. The integrated circuit may be one IC or a collection of multiple ICs. The chip may include, but is not limited to, the following types: GPU (Graphics Processing Unit), CPU (Central Processing Unit), FPGA (Field Programmable Gate Array), DSP (Digital Signal Processor), ASIC (Application Specific Integrated Circuit), SOC (System on Chip), etc. The aforementioned integrated circuit or chip may be used to execute executable instructions (or code) to implement the method for indicating a terminal state described above. The executable instructions may be stored in the integrated circuit or chip, or may be obtained from other devices or apparatuses. For example, the integrated circuit or chip includes a processor, a memory, and an interface for communicating with other devices. The executable instructions may be stored in the processor. When the executable instructions are executed by the processor, the method for indicating a terminal state described above is implemented. Alternatively, the integrated circuit or chip may receive the executable instructions via the interface and transmit them to the processor for execution, to implement the method for indicating a terminal state described above.

In an embodiment, the present disclosure also provides a computer-readable storage medium having stored thereon computer program instructions which, when executed by a processor, implement the steps of the method for indicating a terminal state provided by the present disclosure. For example, the computer-readable storage medium may be a non-transitory computer-readable storage medium including instructions. For example, the memory 3004 mentioned above may include instructions, and the instructions may be executed by the processor 3020 of the apparatus 3000 to complete the method for indicating a terminal state described above. For example, the non-transitory computer-readable storage medium may be ROM, Random Access Memory (RAM), CD-ROM, magnetic tape, floppy disk, optical data storage device, etc.

In another exemplary embodiment, a computer program product is also provided. The computer program product includes a computer program that can be executed by a programmable apparatus. The computer program has code portions for performing the method for indicating a terminal state described above when executed by the programmable apparatus.

Other implementations of the present disclosure will be readily contemplated by those skilled in the art upon consideration of the specification and practice of the present disclosure. This application is intended to cover any variations, uses, or adaptive changes of the present disclosure that follow the general principles of the present disclosure and include common general knowledge or conventional technical means in the art not disclosed in the present disclosure. The specification and embodiments are to be considered exemplary only, with the true scope and spirit of the present disclosure being indicated by the following claims.

It should be understood that the present disclosure is not limited to the precise structures described above and shown in the drawings, and various modifications and changes may be made without departing from the scope thereof. The scope of the present disclosure is limited only by the appended claims.

## Claims

1. A method for indicating a terminal state, performed by a first terminal, comprising:
sending a first message to a relay terminal according to a bearer configuration, wherein the first message is used to instruct the relay terminal to enter a connected state, the bearer configuration is used to indicate whether a first radio bearer of the first terminal is capable of being transmitted via an indirect path, the first radio bearer is a radio bearer for a communication between the first terminal and a network device, and the indirect path is a path for forwarding data or a signaling between the first terminal and the network device via the relay terminal.

2. The method according to claim 1, wherein sending the first message to the relay terminal according to the bearer configuration comprises:
in response to determining, according to the bearer configuration, that the first radio bearer is capable of being transmitted via the indirect path, sending the first message via the indirect path.

3. The method according to claim 2, wherein the first message is a radio resource control (RRC) reconfiguration complete message.

4. The method according to claim 2, wherein sending the first message via the indirect path comprises:
sending the first message through a sidelink radio link control (SL-RLC) entity corresponding to the indirect path.

5. The method according to claim 1, wherein sending the first message to the relay terminal according to the bearer configuration comprises:
in response to determining, according to the bearer configuration, that the first radio bearer is not capable of being transmitted via the indirect path, sending the first message via a sidelink, wherein the sidelink is a link between the first terminal and the relay terminal.

6. The method according to claim 5, wherein the first message is a sidelink radio resource control (SL-RRC) message, the SL-RRC message comprises a first indication parameter, and the first indication parameter is used to instruct the relay terminal to enter the connected state.

7. The method according to claim 5, wherein sending the first message via the sidelink comprises:
in a case where a connection state of the relay terminal is not the connected state, sending the first message via the sidelink.

8. The method according to claim 7, further comprising:
receiving a state parameter sent by the relay terminal, wherein the state parameter is used to indicate the connection state of the relay terminal.

9. The method according to any one of claims 1 to 8, further comprising:
in response to determining, according to the bearer configuration, that a sidelink relay adaptation protocol (SRAP) entity corresponding to the first radio bearer exists, determining that the first radio bearer is capable of being transmitted via the indirect path; or
in a case where the first radio bearer is a split bearer, determining that the first radio bearer is capable of being transmitted via the indirect path.

10. The method according to any one of claims 1 to 8, further comprising:
receiving a second message sent by the network device, wherein the second message is used to instruct the first terminal to configure the indirect path.

11. The method according to any one of claims 1 to 8, wherein the first radio bearer is a signaling radio bearer 1 (SRB1).

12. A method for indicating a terminal state, performed by a relay terminal, comprising:
receiving a first message sent by a first terminal, wherein the first message is a message sent by the first terminal according to a bearer configuration, the bearer configuration is used to indicate whether a first radio bearer of the first terminal is capable of being transmitted via an indirect path, the first radio bearer is a radio bearer for a communication between the first terminal and a network device, and the indirect path is a path for forwarding data or a signaling between the first terminal and the network device via the relay terminal; and
entering a connected state according to the first message.

13. The method according to claim 12, wherein receiving the first message sent by the first terminal comprises:
receiving, via the indirect path, the first message sent by the first terminal.

14. The method according to claim 13, wherein the first message is a radio resource control (RRC) reconfiguration complete message, and the method further comprises:
sending the RRC reconfiguration complete message to the network device.

15. The method according to claim 13, wherein receiving, via the indirect path, the first message sent by the first terminal comprises:
receiving, via a sidelink radio link control (SL-RLC) entity corresponding to the indirect path, the first message sent by the first terminal.

16. The method according to claim 12, wherein receiving the first message sent by the first terminal comprises:
receiving, via a sidelink, the first message sent by the first terminal, wherein the sidelink is a link between the first terminal and the relay terminal.

17. The method according to claim 16, wherein the first message is a sidelink radio resource control (SL-RRC) reconfiguration complete message, the SL-RRC reconfiguration complete message comprises a first indication parameter, and the first indication parameter is used to instruct the relay terminal to enter the connected state.

18. The method according to claim 16, wherein receiving, via the sidelink, the first message sent by the first terminal comprises:
in a case where a connection state of the relay terminal is not the connected state, receiving the first message via the sidelink.

19. The method according to claim 18, further comprising:
sending a state parameter to the first terminal, wherein the state parameter is used to indicate the connection state of the relay terminal.

20. The method according to any one of claims 12 to 19, wherein the first radio bearer is a signaling radio bearer 1 (SRB1).

21. A method for indicating a terminal state, performed by a network device, comprising:
sending a second message to a first terminal, wherein the second message is used to instruct the first terminal to configure an indirect path and send a first message to a relay terminal according to a bearer configuration, wherein the first message is used to instruct the relay terminal to enter a connected state, the bearer configuration is used to indicate whether a first radio bearer of the first terminal is capable of being transmitted via the indirect path, the first radio bearer is a radio bearer for a communication between the first terminal and the network device, and the indirect path is a path for forwarding data or a signaling between the first terminal and the network device via the relay terminal.

22. The method according to claim 21, wherein the first radio bearer is a signaling radio bearer 1 (SRB1).

23. An apparatus for indicating a terminal state, applied to a first terminal, comprising:
a first transceiver module configured to send a first message to a relay terminal according to a bearer configuration, wherein the first message is used to instruct the relay terminal to enter a connected state, the bearer configuration is used to indicate whether a first radio bearer of the first terminal is capable of being transmitted via an indirect path, the first radio bearer is a radio bearer for a communication between the first terminal and a network device, and the indirect path is a path for forwarding data or a signaling between the first terminal and the network device via the relay terminal.

24. An apparatus for indicating a terminal state, applied to a relay terminal, comprising:
a second transceiver module configured to receive a first message sent by a first terminal, wherein the first message is a message sent by the first terminal according to a bearer configuration, the bearer configuration is used to indicate whether a first radio bearer of the first terminal is capable of being transmitted via an indirect path, the first radio bearer is a radio bearer for a communication between the first terminal and a network device, and the indirect path is a path for forwarding data or a signaling between the first terminal and the network device via the relay terminal; and
a second processing module configured to enter a connected state according to the first message.

25. An apparatus for indicating a terminal state, applied to a network device, comprising:
a third transceiver module configured to send a second message to a first terminal, wherein the second message is used to instruct the first terminal to configure an indirect path and send a first message to a relay terminal according to a bearer configuration, wherein the first message is used to instruct the relay terminal to enter a connected state, the bearer configuration is used to indicate whether a first radio bearer of the first terminal is capable of being transmitted via the indirect path, the first radio bearer is a radio bearer for a communication between the first terminal and the network device, and the indirect path is a path for forwarding data or a signaling between the first terminal and the network device via the relay terminal.

26. An apparatus for indicating a terminal state, comprising:
a processor;
a memory for storing processor-executable instructions;
wherein the processor is configured to perform the method according to any one of claims 1 to 11, or the processor is configured to perform the method according to any one of claims 12 to 20, or the processor is configured to perform the method according to claim 21 or 22.

27. A computer-readable storage medium, having stored therein computer program instructions that, when executed by a processor, cause the method according to any one of claims 1 to 11 to be implemented, or causes the method according to any one of claims 12 to 20 to be implemented, or causes the method according to claim 21 or 22 to be implemented.

28. A communication system, comprising:
a first terminal, wherein the first terminal is used to perform the method according to any one of claims 1 to 11;
a relay terminal, wherein the relay terminal is used to perform the method according to any one of claims 12 to 20; and
a network device, wherein the network device is used to perform the method according to claim 21 or 22.
